# EUROPEAN PATENT SPECIFICATION

(11) **EP 4 319 067 B1**
(45) Date of publication and mention of the grant of the patent: **26.11.2025**
(21) Application number: 22794655.5
(22) Date of filing: 18.04.2022
(51) Int. Cl.: H04M 15/00, H04L 12/46, H04L 12/14, H04L 12/28, H04L 45/02, H04L 45/76, H04W 4/24, H04L 45/74, H04L 47/24, H04W 40/20, H04L 45/00, H04L 45/64, H04L 45/50

(54) **COMMUNICATION METHOD AND APPARATUS, DEVICE, SYSTEM, AND COMPUTER-READABLE STORAGE MEDIUM**
KOMMUNIKATIONSVERFAHREN UND -VORRICHTUNG, VORRICHTUNG, SYSTEM UND COMPUTERLESBARES SPEICHERMEDIUM
PROCÉDÉ ET APPAREIL DE COMMUNICATION, DISPOSITIF, SYSTÈME ET SUPPORT D'ENREGISTREMENT LISIBLE PAR ORDINATEUR

(30) Priority: 26.04.2021 CN 202110453978; 30.06.2021 CN 202110736342
(43) Date of publication of application: 07.02.2024
(73) Proprietor: Huawei Technologies Co., Ltd., Shenzhen, Guangdong 518129 (CN)
(72) Inventor: PENG, Tao, Shenzhen, Guangdong 518129 (CN); YU, Zhouyi, Shenzhen, Guangdong 518129 (CN); HUA, Rongrong, Shenzhen, Guangdong 518129 (CN); WANG, Xiaokai, Shenzhen, Guangdong 518129 (CN)
(74) Representative: Körber, Martin Hans
(86) International application number: PCT/CN2022/087414
(87) International publication number: WO 2022/228184

(56) References cited:
- EP-A1- 3 852 419
- CN-A- 107 666 419
- CN-A- 110 620 706
- CN-A- 111 010 702
- CN-A- 111 865 621
- US-A1- 2016 165 508
- US-A1- 2016 241 515
- US-A1- 2020 359 293
- US-A1- 2020 413 236

## Description

### TECHNICAL FIELD

This application relates to the field of communication technologies, and in particular, to a communication method, device, and system, and a computer-readable storage medium.

### BACKGROUND

With development of the software-defined networking (software-defined networking, SDN) technology and the network functions virtualization (network functions virtualization, NFV) technology, a metropolitan area network evolves from a network-centric architecture to a data center-centric architecture, and a network element device evolves from a professional direction to a universal direction. A broadband network gateway (broadband network gateway, BNG) decouples a control function from a forwarding function and decouples software from hardware by using an architecture based on the SDN technology and NFV technology. The BNG that decouples the control function from the forwarding function by using the architecture based on the SDN technology and the NFV technology may be referred to as a virtual broadband network gateway (virtual broadband network gateway, vBNG).

Generally, the vBNG may include a virtual broadband network gateway control plane (virtual broadband network gateway control plane, vBNG-CP) device and a virtual broadband network gateway user plane (virtual broadband network gateway user plane, vBNG-UP) device. The vBNG-CP device manages a plurality of vBNG-UP devices, and schedules users, traffic, and resources among the plurality of vBNG-UP devices. Compared with a single device, the device has greatly improved utilization and reliability.

When a user terminal that obtains an internet protocol (internet protocol, IP) address statically accesses a network, traffic of the user terminal needs to be dynamically sent to an appropriate vBNG-UP device according to some conditions, to implement dynamic migration of the user terminal.

US 2016/241515 A1 discloses a border network gateway for enabling an end user device to access home network resources and receive subscriber services in a visited network. The method includes receiving a connection from the end user device, querying an authentication server to obtain a virtual extended local area network (VXLAN) network identifier (VNI) of the end user device, and checking for the VNI for the end user device in a demultiplexor table of the border network gateway. The process further involves determining whether the end user device is in a home network of the end user device and updating an entry in the demultiplexor table to include a media access control address for the end user device in response to determining the end user device is not in the home network of the end user device.

### SUMMARY

This application provides a communication method, device, and system, and a computer-readable storage medium, to send traffic of a static user to an appropriate UP device.

According to a first aspect, a communication method is provided. The method is applied to a control plane (control plane, CP) device of a virtual broadband network gateway. The virtual broadband network gateway further includes a first user plane (user plane, UP) device. The method includes: The CP device receives a first packet sent by the first UP device, where the first packet carries source information of a first user terminal, and the first user terminal is a user terminal that obtains an internet protocol IP address statically; the CP device searches, based on the source information of the first user terminal, a correspondence between source information of a user terminal and a location identifier of the user terminal accessing a network, to determine a first location identifier of the first user terminal accessing a network, where the first location identifier includes an identifier of a first steering function (steering function, SF) device and an identifier of a first physical port on the first SF device; and the CP device sends the first location identifier to a UP steering function (UP steering function, USF) device. Optionally, the USF device is also referred to as a UP selection function (UP selection function, UPSF) device.

In the method, for the first user terminal that obtains the IP address statically, the CP device can search the correspondence between the source information of the user terminal and the location identifier of the user terminal accessing the network, to obtain the first location identifier of the first user terminal accessing the network, where the first location identifier includes the identifier of the first SF device and the identifier of the first physical port on the first SF device. Then, the CP device sends the first location identifier to the USF device, so that the USF device can determine a specific physical port on a specific SF device from which a user accesses a network, thereby sending traffic of a static user to an appropriate UP device.

In a possible implementation, the method further includes: The CP device receives an identifier of a second UP device that is returned by the USF device; and the CP device determines a second location identifier based on the identifier of the second UP device, and stores a correspondence between the source information of the first user terminal and the second location identifier. The second location identifier includes an identifier of a second SF device and an identifier of a second physical port on the second SF device. The second SF device is the same as or different from the first SF device.

After receiving the identifier of the second UP device that is returned by the USF device, the CP device stores the correspondence between the source information of the user terminal and the second location identifier of the user terminal accessing the network. When a user accesses the network again, user traffic can be simply migrated.

In a possible implementation, the second physical port is the same as or different from the first physical port. The method provided in this application is not only applied to switching between different sub-interfaces on a same physical port on a same SF device, but also supports switching between sub-interfaces on different physical ports of a same SF device, and also supports switching between different sub-interfaces on different SF devices. Therefore, an application scope is wider.

In a possible implementation, the source information of the first user terminal includes at least one of a media access control (media access control, MAC) identifier and a virtual local area network (virtual local area network, VLAN) identifier. The location identifier of the first user terminal accessing the network can be accurately obtained by using the MAC or the VLAN identifier included in the source information of the first user terminal, so that accurate source tracing can be performed on the first user terminal.

In a possible implementation, the identifier of the first physical port includes a slot identifier and/or a subcard identifier, and a port identifier.

In a possible implementation, the first packet includes an IP packet or an address resolution protocol (Address Resolution Protocol, ARP) packet.

In a possible implementation, the method further includes: The CP device delivers a subscriber entry to the second UP device, where the subscriber entry includes the source information of the first user terminal.

The second UP device receives the subscriber entry delivered by the CP device, so that after traffic migration occurs, a static IP address of the static user does not need to change.

In a possible implementation, after determining a first location identifier of the first user terminal accessing a network, the method further includes: The CP device sends an authentication request to an authentication server, where the authentication request includes the first location identifier; the CP device receives an authentication response returned by the authentication server, where the authentication response includes a service quality requirement corresponding to the first location identifier; and the CP device sends the service quality requirement to the USF.

The first location identifier is carried in the authentication request, and is reported to the authentication server, so that precise binding and user location source tracing can be performed. The service quality requirement corresponding to the first location identifier is sent to the USF. This helps the USF determine the appropriate UP device.

According to a second aspect, a communication method is provided. The method is applied to a communication system. The communication system includes a CP device of a virtual broadband network gateway. The virtual broadband network gateway further includes a first UP device and a second UP device. The communication system further includes a USF device. The method includes:
The CP device receives a first packet sent by the first UP device, where the first packet carries source information of a first user terminal, and the first user terminal is a user terminal that obtains an IP address statically.

The CP device searches, based on the source information of the first user terminal, a correspondence between source information of a user terminal and a location identifier of the user terminal accessing a network, to determine a first location identifier of the first user terminal accessing a network, where the first location identifier includes an identifier of a first SF device and an identifier of a first physical port on the first SF device.

The CP device sends the first location identifier to the USF device.

The USF device determines the second UP device based on the first location identifier.

The USF device configures a second SF device by using a controller, to switch traffic from the first user terminal from a first sub-interface that is on the first SF device and that corresponds to the first UP device to a second sub-interface that is on the second SF device and that corresponds to the second UP device. The second SF device is the same as or different from the first SF device.

In the method, the CP device searches the correspondence between the source information of the user terminal and the location identifier of the user terminal accessing the network, to obtain the first location identifier of the first user terminal accessing the network, where the first location identifier includes the identifier of the first SF device and the identifier of the first physical port on the first SF device. Then, the CP device sends the first location identifier to the USF device. In this case, the USF device can determine a specific physical port on a specific SF device from which a user accesses a network, and configure the second SF device through interaction between the USF device and the controller, to switch traffic from the first user terminal from the first sub-interface on the first SF device to the second sub-interface that is on the second SF device and that corresponds to the second UP device, thereby sending traffic of a static user to an appropriate UP device.

In a possible implementation, the method further includes: The USF device returns an identifier of the second UP device to the CP device; and the CP device receives the identifier of the second UP device that is returned by the USF device, determines a second location identifier based on the identifier of the second UP device, and stores a correspondence between the source information of the first user terminal and the second location identifier. The second location identifier includes an identifier of the second SF device and an identifier of a second physical port on the second SF device.

After receiving the identifier of the second UP device that is returned by the USF device, the CP device stores the correspondence between the source information of the user terminal and the second location identifier of the user terminal accessing the network. When a user accesses the network again, user traffic can be simply migrated.

In a possible implementation, the second physical port is the same as or different from the first physical port. The method provided in this application is not only applied to switching between different sub-interfaces on a same physical port on a same SF device, but also supports switching between sub-interfaces on different physical ports of a same SF device, and also supports switching between different sub-interfaces on different SF devices. Therefore, an application scope is wider.

In a possible implementation, the source information of the first user terminal includes at least one of a MAC identifier and a VLAN identifier. The location identifier of the first user terminal accessing the network can be accurately obtained by using the MAC or the VLAN identifier included in the source information of the first user terminal, so that accurate source tracing can be performed on the first user terminal.

In a possible implementation, the identifier of the first physical port includes a slot identifier and/or a subcard identifier, and a port identifier.

In a possible implementation, the first packet includes an IP packet or an ARP packet.

In a possible implementation, the method further includes: The CP device delivers a subscriber entry to the second UP device, where the subscriber entry includes the source information of the first user terminal.

The second UP device receives the subscriber entry delivered by the CP device, so that after traffic migration occurs, a static IP address of the static user does not need to change.

In a possible implementation, the communication system further includes an authentication server. After the CP device determines the first location identifier of the first user terminal accessing the network, the method further includes: The CP device sends an authentication request to the authentication server, where the authentication request includes the first location identifier; the CP device receives an authentication response returned by the authentication server, where the authentication response includes a service quality requirement corresponding to the first location identifier; and the CP device sends the service quality requirement to the USF. The USF device determines the second UP device based on the first location identifier and the service quality requirement.

The first location identifier is carried in the authentication request, and is reported to the authentication server, so that precise binding and user location source tracing can be performed. The service quality requirement corresponding to the first location identifier is sent to the USF. This helps the USF determine the appropriate UP device.

According to a third aspect, a communication apparatus is provided. The apparatus is used in a CP device of a virtual broadband network gateway. The virtual broadband network gateway further includes a first UP device. The apparatus includes:
a first receiving module, configured to receive a first packet sent by the first UP device, where the first packet carries source information of a first user terminal, and the first user terminal is a user terminal that obtains an internet protocol IP address statically;
a first determining module, configured to search, based on the source information of the first user terminal, a correspondence between source information of a user terminal and a location identifier of the user terminal accessing a network, to determine a first location identifier of the first user terminal accessing a network, where the first location identifier includes an identifier of a first SF device and an identifier of a first physical port on the first SF device; and
a first sending module, configured to send the first location identifier to a USF device.

In a possible implementation, the apparatus further includes:
a second receiving module, configured to receive an identifier of a second UP device that is returned by the USF device; and
a second determining module, configured to: determine a second location identifier based on the identifier of the second UP device, and store a correspondence between the source information of the first user terminal and the second location identifier, where the second location identifier includes an identifier of a second SF device and an identifier of a second physical port on the second SF device, and the second SF device is the same as or different from the first SF device.

In a possible implementation, the second physical port is the same as or different from the first physical port.

In a possible implementation, the source information of the first user terminal includes at least one of a media access control MAC identifier and a virtual local area network VLAN identifier.

In a possible implementation, the identifier of the first physical port includes a slot identifier and/or a subcard identifier, and a port identifier.

In a possible implementation, the first packet includes an IP packet or an ARP packet.

In a possible implementation, the apparatus further includes:
a delivery module, configured to deliver a subscriber entry to the second UP device, where the subscriber entry includes the source information of the first user terminal.

In a possible implementation, the apparatus further includes:
a second sending module, configured to send an authentication request to an authentication server, where the authentication request includes the first location identifier;
a third receiving module, configured to receive an authentication response returned by the authentication server, where the authentication response includes a service quality requirement corresponding to the first location identifier; and
a third sending module, configured to send the service quality requirement to the USF.

According to a fourth aspect, a communication system is provided. The system includes a CP device of a virtual broadband network gateway, a first UP device, a second UP device, and a USF device.

The CP device is configured to: receive a first packet sent by the first UP device, where the first packet carries source information of a first user terminal, and the first user terminal is a user terminal that obtains an IP address statically; search, based on the source information of the first user terminal, a correspondence between source information of a user terminal and a location identifier of the user terminal accessing a network, to determine a first location identifier of the first user terminal accessing a network, where the first location identifier includes an identifier of a first steering function SF device and an identifier of a first physical port on the first SF device; and send the first location identifier to the USF device.

The USF device is configured to: determine the second UP device based on the first location identifier; and configure a second SF device by using a controller, to switch traffic from the first user terminal from a first sub-interface that is on the first SF device and that corresponds to the first UP device to a second sub-interface that is on the second SF device and that corresponds to the second UP device, where the second SF device is the same as or different from the first SF device.

In a possible implementation, the USF device is configured to return an identifier of the second UP device to the CP device. The CP device is configured to: receive the identifier of the second UP device that is returned by the USF device, determine a second location identifier based on the identifier of the second UP device, and store a correspondence between the source information of the first user terminal and the second location identifier, where the second location identifier includes an identifier of the second SF device and an identifier of a second physical port on the second SF device.

In a possible implementation, the second physical port is the same as or different from the first physical port.

In a possible implementation, the source information of the first user terminal includes at least one of a MAC identifier and a VLAN identifier.

In a possible implementation, the identifier of the first physical port includes a slot identifier and/or a subcard identifier, and a port identifier.

In a possible implementation, the first packet includes an IP packet or an ARP packet.

In a possible implementation, the CP device is configured to deliver a subscriber entry to the second UP device, where the subscriber entry includes the source information of the first user terminal.

In a possible implementation, the CP device is configured to: send an authentication request to an authentication server, where the authentication request includes the first location identifier; receive an authentication response returned by the authentication server, where the authentication response includes a service quality requirement corresponding to the first location identifier; and send the service quality requirement to the USF.

The USF device is configured to determine the second UP device based on the first location identifier and the service quality requirement.

According to a fifth aspect, a network device is provided. The network device includes a processor, the processor is coupled to a memory, the memory stores at least one program instruction or code, and the at least one program instruction or code is loaded and executed by the processor, to enable the network device to implement the communication method according to any implementation of the first aspect.

In an example embodiment, there are one or more processors, and there are one or more memories.

In an example embodiment, the memory may be integrated with the processor, or the memory is disposed independently of the processor.

In a specific implementation process, the memory may be a non-transitory (non-transitory) memory, for example, a read only memory (read only memory, ROM). The memory and the processor may be integrated on a same chip, or may be separately disposed on different chips. A type of the memory and a manner of disposing the memory and the processor are not limited in this embodiment of this application.

According to a sixth aspect, a communication apparatus is provided. The apparatus includes a transceiver, a memory, and a processor. The transceiver, the memory, and the processor communicate with each other through an internal connection channel. The memory is configured to store instructions. The processor is configured to execute the instructions stored in the memory, to control the transceiver to receive a signal, and control the transceiver to send a signal. In addition, when the processor executes the instructions stored in the memory, the communication apparatus is enabled to perform the method according to any one of the first aspect or the possible implementations of the first aspect.

According to a seventh aspect, a computer-readable storage medium is provided. The storage medium stores at least one instruction, and the instruction is loaded and executed by a processor, to enable a computer to implement the communication method according to any one of the first aspect or the implementations the first aspect.

According to an eighth aspect, a computer program (product) is provided. The computer program (product) includes computer program code, and when the computer program code is run by a computer, the computer is enabled to perform the methods in the foregoing aspects.

According to a ninth aspect, a chip is provided. The chip includes a processor, configured to invoke, from a memory, instructions stored in the memory, and run the instructions, so that a communication device in which the chip is installed performs the methods in the foregoing aspects.

According to a tenth aspect, another chip is provided. The chip includes an input interface, an output interface, a processor, and a memory. The input interface, the output interface, the processor, and the memory are connected to each other through an internal connection channel. The processor is configured to execute code in the memory, and when the code is executed, the processor is configured to perform the methods in the foregoing aspects.

It should be understood that, for beneficial effects achieved by the technical solutions in the third aspect, the fourth aspect, and the fifth aspect of embodiments of this application and the corresponding possible implementations, refer to the technical effects of the first aspect, the second aspect, and the corresponding possible implementations. Details are not described herein again.

### BRIEF DESCRIPTION OF DRAWINGS

FIG. 1 is a schematic diagram of networking according to an embodiment of this application;
FIG. 2 is a schematic diagram of a connection relationship between an SF device and a UP device according to an embodiment of this application;
FIG. 3 is a schematic interaction diagram of a communication method according to an embodiment of this application;
FIG. 4 is a schematic diagram of networking according to an embodiment of this application;
FIG. 5 is a schematic interaction diagram of a communication method according to an embodiment of this application;
FIG. 6 is a schematic diagram of a structure of a communication apparatus according to an embodiment of this application;
FIG. 7 is a schematic diagram of a structure of a communication apparatus according to an embodiment of this application;
FIG. 8 is a schematic diagram of a structure of a communication device according to an embodiment of this application; and
FIG. 9 is a schematic diagram of a structure of a communication device according to an embodiment of this application.

### DESCRIPTION OF EMBODIMENTS

To make objectives, technical solutions, and advantages of this application clearer, the following further describes implementations of this application in detail with reference to accompanying drawings.

As a BNG decouples control from forwarding and software from hardware based on an SDN/NFV architecture, a vBNG including a vBNG-CP device and a vBNG-UP device emerges. The vBNG-CP device can manage a plurality of vBNG-UP devices and schedule users, traffic, and resources among the plurality of vBNG-UP devices. Compared with a single device, the device has greatly improved utilization and reliability.

In this embodiment of this application, the vBNG-CP device may also be referred to as a CP device for short, and the vBNG-UP device may also be referred to as a UP device for short. There are three types of interfaces between the vBNG-CP device and the vBNG-UP device. PRi is a service interface. After receiving a user access protocol packet, the vBNG-UP device encapsulates the packet and sends the packet to the vBNG-CP device through PRi for processing. Mi is a management interface. The vBNG-CP device delivers a configuration to the vBNG-UP device through Mi, and the vBNG-UP device reports some running status through the interface. SCi is a control interface. The vBNG-CP device processes the user access protocol packet and exchanges a protocol packet with a user. After the user accessing a network, the vBNG-CP device delivers a subscriber entry to a corresponding vBNG-UP device through the interface.

As a virtualized network function (virtualized network function, VNF) device, the vBNG-CP device has two forms: a virtual UP device (vUP device), which can run on an x86 server; and a physical UP device (pUP device), such as a traditional hardware network device.

The vBNG-CP device can manage a plurality of vBNG-UP devices, and users are managed on the vBNG-CP device in a unified manner. Therefore, the users can be flexibly scheduled among the vBNG-UP devices based on a quantity of user sessions and traffic load.

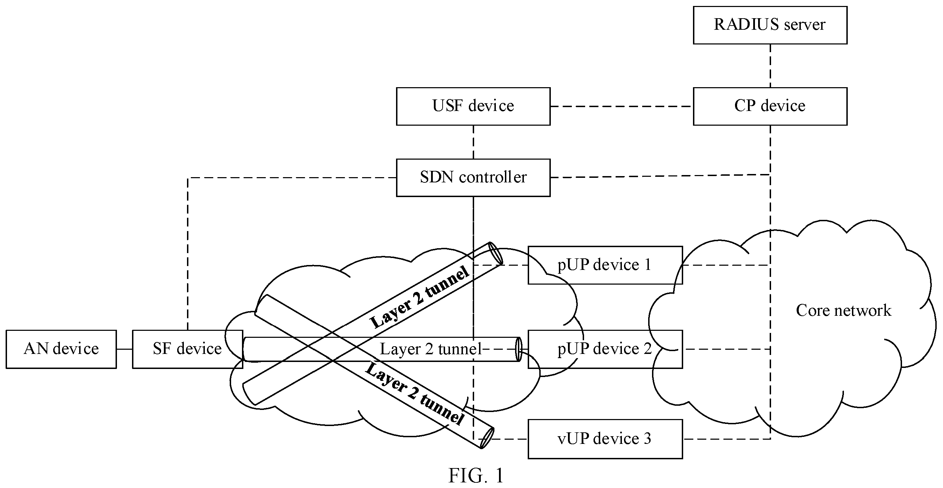

In networking shown in FIG. 1, vBNG-UP devices (a pUP device 1, a pUP device 2, and a vUP device 3 are used as an example in FIG. 1) may be distributed at a network edge, or may be distributed at a high location on a network. To dynamically select a vBNG-UP device for accessing by a user, the vBNG-CP device needs to work with an SDN controller (controller) to implement dynamic migration of user traffic.

As shown in FIG. 1, an SF device exists between an access network (access network, AN) device and the vBNG-UP devices, and a layer 2 tunnel is established between the SF device and each vBNG-UP device. Physical ports between the SF device and the AN device are divided into different sub-interfaces, and the different sub-interfaces are respectively corresponding to layer 2 (Layer 2) tunnels of different vBNG-UP devices.

For example, it is configured that a user terminal accesses a network from the pUP device 1. The pUP device 1 forwards a user access protocol packet to the vBNG-CP device, and the vBNG-CP device sends user accessing information (which for example, includes source information, a service level agreement (service level agreement, SLA), and accessing location information) to a USF device. The USF device determines, based on the user accessing information, that the user needs to access the network from the pUP device 2, and indicates the vBNG-CP device to deliver a subscriber entry to the pUP device 2. In addition, the USF device indicates the SDN controller to configure the SF device, and configure a VLAN/or double-layer VLAN (802.1Q in 802.1Q, QinQ) identifier corresponding to the user to a sub-interface that is between the SF device and the AN device and that corresponds to the pUP device 2. Then, the SF device directly forwards a subsequent packet of the user to the pUP device 2 through a layer 2 tunnel between the SF device and the pUP device 2.

The USF device is a dynamic migration policy point, and the vBNG-CP device needs to query the USF device to determine a BNG-UP device to which the subscriber entry is delivered. In addition, the USF device needs to indicate the SDN controller to configure the SF device. It should be noted that the USF device may be built in the vBNG-CP device, or may be built in the SDN controller, or may be an independent network element. If the USF device is built in the SDN controller or the CP device, interaction between the USF device and the SDN controller or the CP device is internal interaction, and sent information or a sent packet is sent internally.

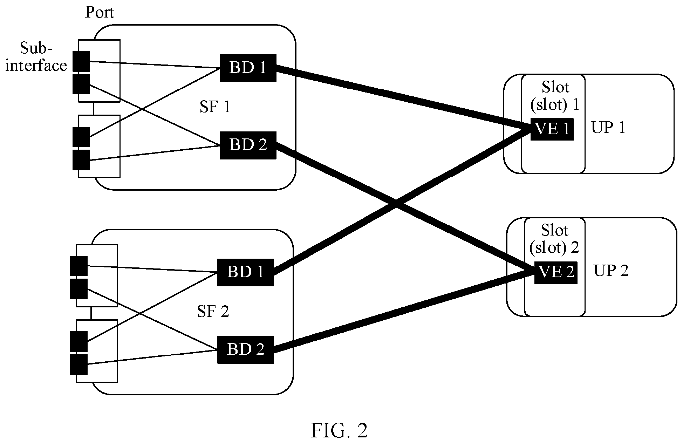

When a user accesses a network, the CP device reports a user's accessing location on the UP device and a corresponding sub-interface to a remote authentication dial-in user service (remote authentication dial-in user service, RADIUS) for precise binding and source tracing of the user. However, in a steering (STEERING) scenario, users may migrate among accessing sub-interfaces of a plurality of UP devices. As a result, an accessing sub-interface of a user changes, and precise binding and source tracing of the user cannot be performed. In addition, refer to a connection relationship between an SF device and a UP device shown in FIG. 2. One SF device has a plurality of physical ports and a plurality of broadcast domains (broadcast domains, BDs). One physical port has a plurality of sub-interfaces, and different sub-interfaces on one port correspond to different BDs, and different BDs are connected to virtual interfaces (virtual interfaces, VIs) in slots (slots) of different UP devices. One sub-interface corresponds to one BD, and one BD corresponds to one UP device. For example, a BD 1 in an SF 1 corresponds to a VE 1 in a UP 1, and a BD 2 in an SF 2 corresponds to a VE 2 in a UP 2.

Therefore, when a plurality of SF devices are deployed together, and service traffic of the plurality of SF devices is aggregated to a same UP device, at least one of a USF device and an SDN controller can determine a correspondence between a sub-interface on each SF device and each UP device, but cannot determine a specific physical port on a specific SF device from which a user accesses a network. When the USF device and the SDN controller cannot determine a specific physical port on a specific SF device through which a user accesses a network, user traffic cannot be migrated between different physical ports of a same SF device or between different sub-interfaces of physical ports of different SF devices.

A user terminal that obtains an IP address statically is referred to as a static user in this embodiment of this application. Because the static user accesses the network by using an IP packet or an ARP packet, but the IP packet or the ARP packet cannot carry, by using OPTION, an access location identifier of the user terminal accessing the network, static user source tracing and static user migration fail.

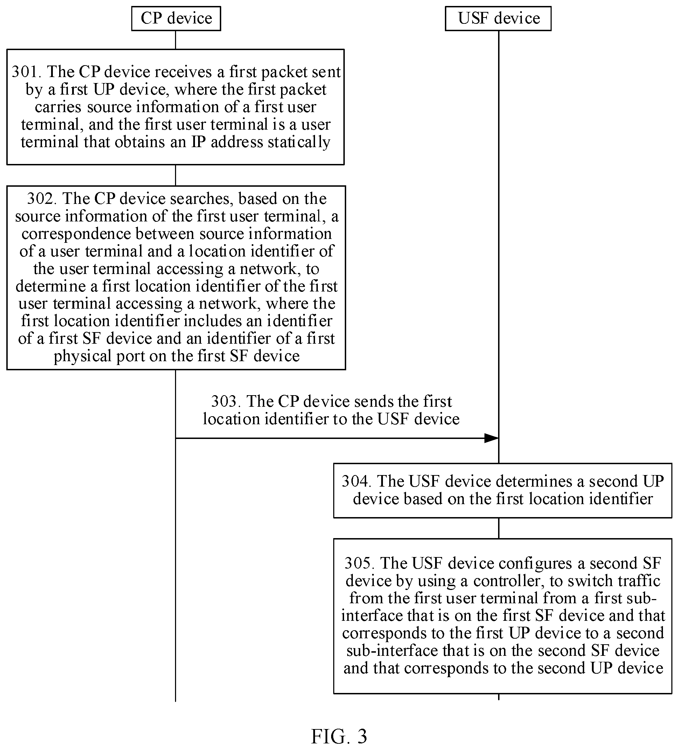

An embodiment of this application provides a communication method. With reference to the network shown in FIG. 1, refer to FIG. 3. The method provided in this embodiment of this application includes the following several steps.

Step 301. A CP device receives a first packet sent by a first UP device, where the first packet carries source information of a first user terminal, and the first user terminal is a user terminal that obtains an IP address statically.

The first user terminal is a terminal device that obtains an IP address statically, and is referred to as a static user in this embodiment of this application. The static user has a fixed IP address, for example, a fixed IP address provided by a server for a leased line service. Optionally, the first user terminal is a residential gateway (residential gateway, RGW).

Because the first user terminal is a static user terminal, and the static user terminal triggers network accessing by using an IP packet or an ARP packet, optionally, the first packet sent by the first user terminal is an IP packet or an ARP packet. Because the IP packet or the ARP packet does not carry OPTION82/OPTION18, the IP packet or the ARP packet cannot carry, by using OPTION, an access location identifier of the user terminal.

In this embodiment of this application, when the static user terminal accesses a network, the CP device usually configures an interface of the static user terminal and at least one type of source information of a MAC identifier and a VLAN identifier, to limit a network access location of the static user terminal. For example, the source information of the first user terminal carried in the first packet is MAC+VLAN.

Step 302. The CP device searches, based on the source information of the first user terminal, a correspondence between source information of a user terminal and a location identifier of the user terminal accessing a network, to determine a first location identifier of the first user terminal accessing a network, where the first location identifier includes an identifier of a first SF device and an identifier of a first physical port on the first SF device.

In a STEERING scenario, a specific physical interface on a specific SF device from which the static user terminal accesses the network needs to be determined for precise user binding and source tracing. In this way, the static user terminal can be migrated among access sub-interfaces of a plurality of UP devices. In addition to configuring the interface of the static user terminal, and the source information such as the MAC identifier and the VLAN identifier, the CP device further configures the location identifier of the static user terminal accessing the network. For example, a physical port on an SF device is specified as the network access location of the static user terminal. If the static user terminal does not access the network from the configured network access location, traffic forwarding on the SF device fails during user traffic migration, resulting in detection fail of the static user.

In a possible implementation, the correspondence between the source information of the user terminal and the location identifier of the user terminal accessing the network is configured on the CP device. The source information of the first user terminal includes at least one of the MAC identifier and the VLAN identifier, and the network access location identifier includes an identifier of the SF device and an identifier of a physical port on the SF device. The CP device can determine, based on the configured correspondence between the source information of the user terminal and the location identifier of the user terminal accessing the network, the location identifier of the first user terminal accessing the network.

For example, the correspondence between the source information of the user terminal and the location identifier of the user terminal accessing the network includes the correspondence between the source information of the first user terminal and the first location identifier of the first user terminal accessing the network. After receiving the first packet that carries the source information of the first user terminal, the CP device can determine, based on the source information of the first user terminal, the location identifier of the first user terminal accessing the network, that is, the first location identifier. Optionally, the first location identifier includes the identifier of the first SF device and the identifier of the first physical port on the first SF device.

In this embodiment of this application, the identifier of the physical port includes a slot identifier and/or a subboard identifier, and a port identifier. A receiving location of a packet, that is, the network access location of the user terminal, can be determined by using the identifier of the physical port. For example, based on the identifier of the first physical port on the first SF device, a specific port (identified by a port identifier) of a specific subboard (identified by a subboard identifier) on a specific slot (identified by a slot identifier) of the first SF device from which the first packet accesses the network can be determined.

In a possible implementation, the CP device configures the correspondence between the source information of the first user terminal and the first location identifier, and the source information of the first user terminal is configured on the first physical port on the first SF device corresponding to the first location identifier, so that a first sub-interface of the first physical port on the first SF device receives the first packet based on the source information of the first user terminal in the first packet. The first sub-interface is corresponding to the first UP device. Therefore, the first SF device sends the first packet to the first UP device, and the first UP device sends the first packet to the control plane CP device. The first sub-interface is also referred to as a pre-migration sub-interface, or a configured sub-interface, or an initial sub-interface.

In addition, when the static user terminal accesses the network, the first SF device not only sends the first packet to the first UP device, but also performs home terminal aggregation: aggregates static user terminals to the first UP device, forwards a layer 2 packet, and performs VLAN/QinQ isolation on the static users. Each static user exclusively uses one VLAN/QinQ. QinQ refers to two VLAN identifiers, for example, a service VLAN (service VLAN, SVLAN) + a customer VLAN (customer VLAN, CVLAN). The VLAN/QinQ is a sub-interface corresponding to a corresponding access location configured by the CP device during initial network access, for example, a first sub-interface of the first physical port on the first SF device, but may not be configured on the first sub-interface.

Step 303. The CP device sends the first location identifier to the USF device.

In a possible implementation, after determining the first location identifier of the first user terminal accessing the network, the CP device sends the first location identifier to the USF device. The USF device may determine an appropriate UP device based on the first location identifier. Optionally, the CP device further sends a service quality requirement of the first user terminal to the USF device, to obtain, by using the USF device, a UP device satisfying the service quality requirement.

A manner in which the CP device obtains the service quality requirement of the first user terminal is not limited in this embodiment of this application. In a possible implementation, a communication system further includes an authentication server, and that the CP device obtains the service quality requirement of the first user terminal includes: The CP device sends an authentication request to the authentication server, where the authentication request includes the first location identifier; and the CP device receives an authentication response returned by the authentication server, where the authentication response includes the service quality requirement corresponding to the first location identifier. After the CP device obtains the service quality requirement of the first user terminal, the CP device sends the service quality requirement to the USF.

That is, after determining the first location identifier of the first user terminal accessing the network, the method further includes: The CP device sends the authentication request to the authentication server, where the authentication request includes the first location identifier; the CP device receives the authentication response returned by the authentication server, where the authentication response includes the service quality requirement corresponding to the first location identifier; and the CP device sends the service quality requirement to the USF.

Optionally, the authentication request sent by the CP device to the authentication server may further include the source information of the first user terminal. The authentication server may determine a corresponding service quality requirement based on the source information and the first location identifier.

In this embodiment of this application, when performing user authentication with a RADIUS server, the CP device uses an access sub-interface identifier (for example, the first location identifier) of the SF device as the location identifier of the static user, and reports the location identifier to the RADIUS server, to perform precise binding and static user location source tracing.

Step 304. The USF device determines a second UP device based on the first location identifier.

In a possible implementation, that the USF device determines a second UP device based on the first location identifier includes: The USF device performs source tracing on the first user terminal based on the first location identifier, and selects a UP with minimum load in the communication system as the second UP device, for example, a pUP device 2 in FIG. 1.

In a possible implementation, when the CP device sends the service quality requirement to the USF, that the USF device determines a second UP device based on the first location identifier includes: The USF device determines the second UP device based on the first location identifier and the service quality requirement. For example, the service quality requirement is SLA information. After the USF device obtains the SLA information of the first user terminal, the USF device may query an SLA policy, to determine a target UP device based on a found SLA policy. For example, a UP device with minimum load in UP devices matching the SLA is used as the second UP device that satisfies the SLA information, for example, the pUP device 2 in FIG. 1.

Step 305. The USF device configures a second SF device by using a controller, to switch traffic from the first user terminal from the first sub-interface that is on the first SF device and that corresponds to the first UP device to a second sub-interface that is on the second SF device and that corresponds to the second UP device. The second SF device is the same as or different from the first SF device.

In a possible implementation, after determining the second UP device, the USF device configures a corresponding access location identifier for the second UP device, that is, a location identifier at which the second UP device can access the network. For example, the second UP device corresponds to the second sub-interface, and a corresponding location identifier configured for the second UP device is a second location identifier. The second location identifier may include an identifier of the second SF device and an identifier of a second physical port on the second SF device.

In a possible implementation, the USF device sends the second location identifier and an identifier of the second UP device to the SDN controller, and the SDN controller determines the second sub-interface based on the identifier of the second UP device, to switch the traffic from the first user terminal from the first sub-interface that is on the first SF device and that corresponds to the first UP device to the second sub-interface that is on the second SF device and that corresponds to the second UP device. The switching the traffic from the first user terminal from the first sub-interface that is on the first SF device and that corresponds to the first UP device to the second sub-interface that is on the second SF device and that corresponds to the second UP device may also be understood as switching the traffic from the first user terminal from the first sub-interface that is on the first physical port on the first SF device and that corresponds to the first UP device to the second sub-interface that is on the second physical port on the second SF device and that corresponds to the second UP device.

In a possible implementation, the second physical port is the same as or different from the first physical port. For example, if the second physical port is the same as the first physical port, the identifier of the second SF device is also the same as the identifier of the first SF device, and both are identifiers of the SF device that receives the first packet. For another example, if the second physical port and the first physical port are different physical ports on a same SF device, the second physical port is different from the first physical port, and the identifier of the second SF device is the same as the identifier of the first SF device, that is, both are identifiers of the SF device that receives the first packet. For another example, if the second physical port and the first physical port are a same physical port on different SF devices, the identifier of the second SF device is different from the identifier of the first SF device, and the identifier of the second physical port is the same as the identifier of the first physical port. For another example, the second physical port and the first physical port are different physical ports on different SF devices, the identifier of the second SF device is different from the identifier of the first SF device, and the identifier of the second physical port is different from the identifier of the first physical port.

In addition, in a possible implementation, the USF device further delivers a migration policy to a corresponding SF device, and maps source information of a user to a layer 2 tunnel connected to a corresponding UP device, for example, a virtual extensible local area network (virtual extensible local area network, VXLAN), a virtual leased line (virtual leased line, VLL), or an Ethernet virtual private network (Ethernet virtual private network, EVPN). For example, the source information of the first user terminal is mapped to a layer 2 tunnel connected to the second UP device.

In a possible implementation, that the USF device configures a second SF device by using a controller includes: The SDN controller receives the identifier of the second UP device and/or the second location identifier, and a virtual local area network identifier that are sent by the USF device, and sends, based on the identifier of the second UP device and/or the second location identifier, and the virtual local area network identifier, a configuration instruction to the second SF device corresponding to the second location identifier. Optionally, the virtual local area network identifier corresponds to the source information of the first user terminal, or corresponds to a network identifier of a layer 2 tunnel corresponding to the first user terminal.

Because a location identifier includes an identifier of the SF device and an identifier of the physical port, for example, the identifier of the physical port may be represented as a slot identifier + a subboard identifier + a port identifier. The configuration instruction includes an identifier of the second sub-interface and the virtual local area network identifier, and the second sub-interface corresponds to the second UP device. In this way, when there are a plurality of SF devices in the system, and each SF device has a plurality of physical ports connected to an AN device, the SDN controller can determine an SF device interface (a physical port and a sub-interface) on an SF device that is to be configured.

For example, a user originally accesses the network from a sub-interface 1 (corresponding to a pUP device 1) of a physical port 1 on an SF device 1, and subsequent traffic of the user needs to be switched to a sub-interface 2 (corresponding to a pUP device 2) of the physical port 1 on the SF device 1. The SDN controller sends a configuration instruction to the SF device 1, to configure the virtual local area network identifier (for example, a VLAN/QinQ identifier) on the sub-interface 2 of the physical port 1 on the SF device 1. For another example, a user originally accesses the network from a sub-interface 1.1 (corresponding to a pUP device 1) of a physical port 1 on an SF device 1, and subsequent traffic of the user needs to be switched to a sub-interface 2.1 (corresponding to a pUP device 2) of a physical port 2 on the SF device 1. The SDN controller sends a configuration instruction to the SF device 1, to configure a VLAN/QinQ identifier on the sub-interface 2.1 of the physical port 2 on the SF device 1. For another example, a user originally accesses the network from the sub-interface 1.1 (corresponding to a pUP device 1) of a physical port 1 on an SF device 1, and subsequent user traffic needs to be switched to a sub-interface 3.1 (corresponding to a pUP device 2) of a physical port 3 on an SF device 2. The SDN controller sends a configuration instruction to the SF device 2, to configure a VLAN/QinQ identifier on the sub-interface 3.1 of the physical port 3 on the SF device 2.

In a possible implementation, the second SF device receives the configuration instruction sent by the SDN controller. Because the configuration instruction includes the identifier of the second sub-interface and the virtual local area network identifier, the second SF device configures the virtual local area network identifier on the second sub-interface. In a subsequent communication process, the second SF device receives a second packet sent by a second user terminal, where the second packet includes the virtual local area network identifier; and the second SF device sends the second packet to the second UP terminal based on the virtual local area network identifier. Optionally, the second user terminal is different from the first user terminal, or the second user terminal may be the same as the first user terminal.

In a possible implementation, if the virtual local area network identity is configured on the first sub-interface of the first physical port on the first SF device, the first SF device also receives the configuration instruction, and the configuration instruction further includes an identifier of the first sub-interface. The method further includes: The first SF device deletes the virtual local area network identifier configured on the first sub-interface.

In addition, in this embodiment of this application, after determining the second UP device satisfying the service quality requirement, the USF device further sends the identifier of the second UP device to the CP device. The method further includes: The CP device receives the identifier of the second UP device that is returned by the USF device; and the CP device determines the second location identifier based on the identifier of the second UP device, and stores a correspondence between the source information of the first user terminal and the second location identifier. The second location identifier is the location identifier at which the second UP device can access the network, and includes the identifier of the second SF device and the identifier of the second physical port on the second SF device. The second UP device corresponds to the second sub-interface.

In a possible implementation, in addition to sending the identifier of the second UP device to the CP device, the USF device further sends the second location identifier to the CP device, and the CP device receives the identifier of the second UP device and the second location identifier that are returned by the USF device; and stores the correspondence between the source information of the first user terminal and the second location identifier based on the second location identifier.

After receiving the identifier of the second UP device that is returned by the USF device, the CP device stores the correspondence between the source information of the user terminal and the second location identifier of the user terminal accessing the network. When a user accesses the network again, user traffic can be simply migrated. Optionally, after storing the correspondence between the source information of the first user terminal and the second location identifier, the CP device may also delete the previously stored correspondence between the source information of the first user terminal and the first location identifier, to save storage space.

After the CP device determines that the target UP device is the second UP device, the CP device delivers a subscriber entry to the second UP device, where the subscriber entry includes the source information of the first user terminal. In this embodiment of this application, because the first user terminal is a static user terminal, an IP address of the first user terminal is a fixed static IP, and the subscriber entry generated by the CP device includes the source information of the first user terminal, the subscriber entry includes the static IP address of the first user terminal.

In a possible implementation, after the CP device delivers the subscriber entry to the second UP device, the method further includes: The second UP device receives the subscriber entry delivered by the CP device, and determines, based on the subscriber entry, whether the static IP address of the first user terminal is within a network segment address range to which the second UP device belongs; and in response to that the static IP address of the first user terminal is not within the network segment address range to which the second UP device belongs, the second UP device releases separate host route information. For example, the second UP device releases a separate 32-bit host route based on the static IP address of the first user terminal. In this way, the static IP address of the static user does not need to be changed after traffic migration.

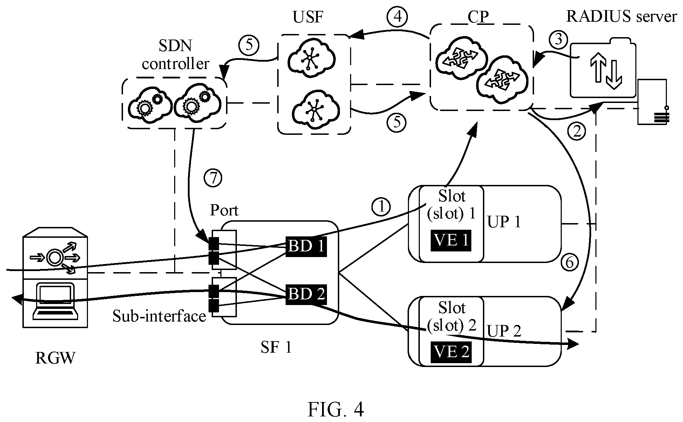

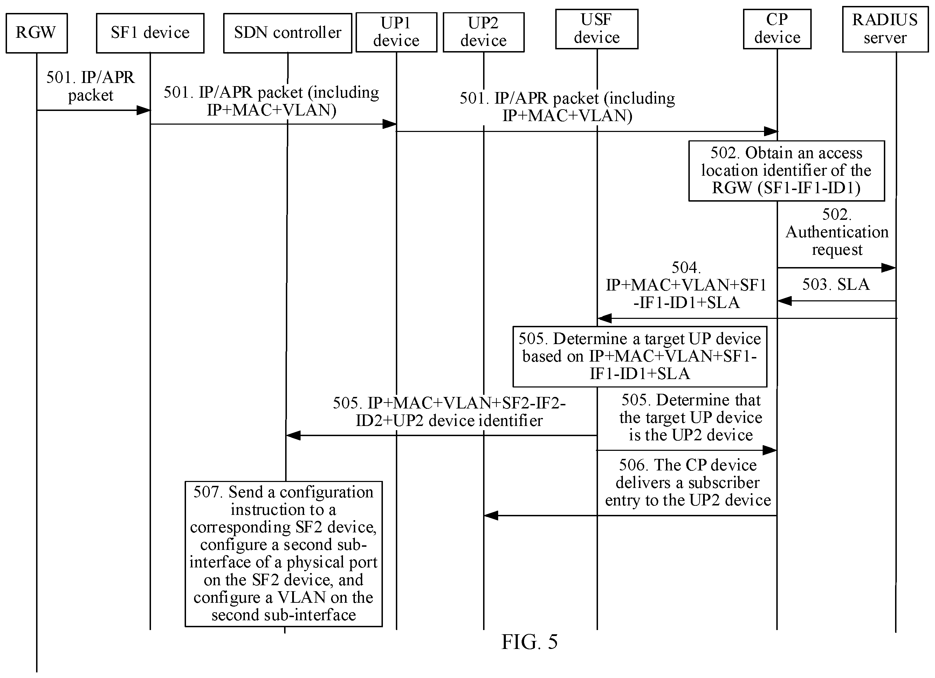

For ease of understanding, the communication method provided in this embodiment of this application is described by using a schematic diagram of the networking shown in FIG. 4 as an example. The method may be that shown in FIG. 5. □ to □ in FIG. 4 are respectively corresponding to 501 to 507 in FIG. 5. As shown in FIG. 5, before performing the communication method provided in this embodiment of this application, a CP device performs initialization configuration based on source information of a static user terminal (for example, an RGW), that is, the CP device configures a correspondence between source information of a user terminal and a location identifier of the user terminal accessing a network. Then, the communication method includes but is not limited to the following several steps.

501. The RGW sends an IP packet or an ARP packet to an SF1 device.

The IP packet or the ARP packet carries the source information of the RGW, for example, IP+MAC+VLAN. Because initialization configuration is performed on the CP device and the RGW, the RGW can determine a network access location of the RGW. Therefore, the SF device receives, by using a first sub-interface of a configured physical port, the IP packet or the ARP packet sent by the RGW.

501. If a virtual network identifier of the RGW is not configured on any sub-interface of the SF1 device, the SF1 device accesses a network from a UP1 device by default. Therefore, the SF1 device sends the IP packet or the ARP packet of the RGW to the CP device by using the UP1 device.

502. The CP device searches a correspondence between source information and a network access location identifier based on the source information of the RGW (for example, IP+MAC+VLAN), to obtain an access location identifier of the RGW (for example, SF1-IF1-ID1).

Optionally, the step further includes: The CP device reports an authentication request of a user to a RADIUS server. Optionally, the authentication request carries an access location identifier of the user, that is, the first location identifier in the embodiment shown in FIG. 3. In a possible implementation, the method further includes the following step 503.

503. The RADIUS server returns a service quality requirement of the user, for example, SLA information, to the CP device.

504. The CP device sends the access location identifier to a USF device, to request the USF device to determine a target UP device.

Optionally, in addition to sending the access location identifier (for example, SF1-IF1-ID1) to the USF device, the CP device may further send at least one of the source information (for example, IP+MAC+VLAN) and the service quality requirement (for example, the SLA information) to the USF device.

505. The USF device determines the target UP device. For example, the USF device may directly select a UP with minimum load in a communication system as the target UP device, that is, a second UP device. Optionally, if the CP device sends the service quality requirement to the USF device, the target UP device determined by the USF device may be a UP device with minimum load in UP devices matching the SLA, that is, the UP2 device in FIG. 5, or may be the pUP device 2 in FIG. 1. In a possible implementation, the method further includes the following step 505.

505. The USF device sends an identifier of the UP2 device to the CP device.

Optionally, the USF device sends the access location identifier (that is, the second location identifier in the embodiment shown in FIG. 3, for example, SF2-IF2-ID2) to the CP device. Optionally, the CP device determines, based on the identifier of the UP2 device, access location information (SF2-IF2-ID2) corresponding to the UP2 device, and stores a correspondence between the source information (for example, IP+MAC+VLAN) and the access location information (SF2-IF2-ID2). Optionally, the method further includes the following steps 505 to 507.

505. The USF device sends the source information (for example, IP+MAC+VLAN), the access location information (for example, SF2-IF2-ID2), and the identifier of the UP2 device to an SDN controller.

506. The CP device delivers a subscriber entry to the UP2 device.

507. The SDN controller sends a configuration instruction to a corresponding SF2 device based on information sent by the USF device, configures a second sub-interface of a physical port on the SF2 device, and configures a virtual network identifier (for example, a VLAN/QinQ) in the source information on the second sub-interface, to migrate user traffic to the UP2 device. The second sub-interface may be determined based on the identifier of the UP2 device.

Then, the user traffic is forwarded by using a UP device identified by the identifier of the UP2 device.

In the foregoing process, the user traffic is switched from the pUP device 1 to the pUP device 2, an initial sub-interface is a default sub-interface, and a target sub-interface is a sub-interface corresponding to the pUP device 2. In another case, it is assumed that the user traffic continues to be migrated from the pUP device 2 to a vUP device 3 (refer to FIG. 1). In this case, a pre-migration sub-interface (the initial sub-interface) becomes the sub-interface corresponding to the pUP device 2, and the target sub-interface becomes a sub-interface corresponding to the vUP device 3. The SDN controller may determine, based on SF-IF-ID and VLAN/QinQ in the information sent by the NSF device, that the initial sub-interface (the physical port and the sub-interface) is the sub-interface corresponding to the pUP device 2, indicate the SF device to delete the VLAN/QinQ on the sub-interface corresponding to the pUP device 2, and configure the VLAN/QinQ on the sub-interface corresponding to the vUP device 3.

The foregoing process illustrates: The SDN controller determines, based on information sent by the CP device, a sub-interface of the SF device to be configured. In another implementation, the USF device may determine an SF device to perform a migration action, an initial sub-interface and a target sub-interface on the SF device, and a VLAN/QinQ to be migrated, and then send the information to the SDN controller, so that the SDN controller delivers a configuration command to the SF device.

According to the technical solution provided in this embodiment of this application, the user traffic may be migrated from the UP 1 to the UP 2 based on user information (for example, an access location identifier or user SLA information). The CP device is configured with an identifier of an SF device accessed by a static user and an identifier of a physical port on the SF device, so that source tracing can be performed on a network access location of the static user, so that traffic of the static user is sent to an appropriate UP device. In addition, if the static user needs to be migrated to another SF device interface, the CP device re-saves the identifier of the SF device accessed by the static user and the identifier of the user-side physical port on the SF device.

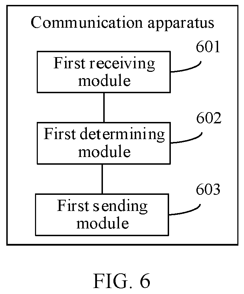

The foregoing describes the communication method in embodiments of this application. Corresponding to the foregoing method, embodiments of this application further provide a communication apparatus. FIG. 6 is a schematic diagram of a structure of a communication apparatus according to an embodiment of this application. The apparatus is used in a CP device of a virtual broadband network gateway, where the virtual broadband network gateway further includes a first UP device. Based on a plurality of modules below shown in FIG. 6, the communication apparatus shown in FIG. 6 can perform all or some operations performed by the CP device. It should be understood that the apparatus may include more additional modules than the modules shown in the figure, or some of the modules shown in the figure are omitted. This is not limited in this embodiment of this application. As shown in FIG. 6, the apparatus includes:
a first receiving module 601, configured to receive a first packet sent by a first UP device, where the first packet carries source information of a first user terminal, and the first user terminal is a user terminal that obtains an IP address statically;
a first determining module 602, configured to search, based on the source information of the first user terminal, a correspondence between source information of a user terminal and a location identifier of the user terminal accessing a network, to determine a first location identifier of the first user terminal accessing a network, where the first location identifier includes an identifier of a first SF device and an identifier of a first physical port on the first SF device; and
a first sending module 603, configured to send the first location identifier to a USF device.

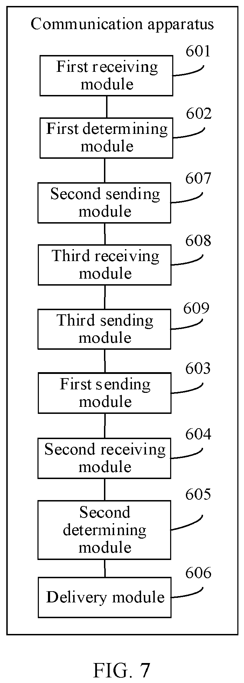

In a possible implementation, as shown in FIG. 7, the apparatus further includes:
a second receiving module 604, configured to receive an identifier of a second UP device that is returned by the USF device; and
a second determining module 605, configured to: determine a second location identifier based on the identifier of the second UP device, and store a correspondence between the source information of the first user terminal and the second location identifier, where the second location identifier includes an identifier of a second SF device and an identifier of a second physical port on the second SF device, and the second SF device is the same as or different from the first SF device.

In a possible implementation, the second physical port is the same as or different from the first physical port.

In a possible implementation, the source information of the first user terminal includes at least one of a MAC identifier and a VLAN identifier.

In a possible implementation, the identifier of the first physical port includes a slot identifier and/or a subcard identifier, and a port identifier.

In a possible implementation, the first packet includes an IP packet or an ARP packet.

In a possible implementation, the apparatus further includes:
a delivery module 606, configured to deliver a subscriber entry to the second UP device, where the subscriber entry includes the source information of the first user terminal.

In a possible implementation, the apparatus further includes:
a second sending module 607, configured to send an authentication request to an authentication server, where the authentication request includes the first location identifier;
a third receiving module 608, configured to receive an authentication response returned by the authentication server, where the authentication response includes a service quality requirement corresponding to the first location identifier; and
a third sending module 609, configured to send the service quality requirement to the USF.

According to the technical apparatus provided in this embodiment of this application, user traffic may be migrated from the first UP device to the second UP device based on user information (for example, an access location identifier or user SLA information). The CP device is configured with an identifier of an SF device accessed by a static user and an identifier of a user-side physical port on the SF device, so that source tracing can be performed on a network access location of the static user, so that traffic of the static user is sent to an appropriate UP device.

It should be noted that any apparatus embodiment described above is merely an example. The units described as separate parts may or may not be physically separate, and parts displayed as units may or may not be physical units, may be located in one position, or may be distributed on a plurality of network units. Some or all of the modules may be selected based on actual requirements to achieve an objective of a solution of this embodiment. In addition, in accompanying drawings of the communication apparatus embodiments provided in this application, a connection relationship between the modules indicates that there is a communication connection between the modules, and the communication connection may be specifically implemented as one or more communication buses or signal cables. A person of ordinary skill in the art may understand and implement the embodiment without creative efforts.

An embodiment of this application further provides a communication system. The system includes a CP device of a virtual broadband network gateway, a first UP device, a second UP device, and a USF device.

The CP device is configured to: receive a first packet sent by the first UP device, where the first packet carries source information of a first user terminal, and the first user terminal is a user terminal that obtains an IP address statically; search, based on the source information of the first user terminal, a correspondence between source information of a user terminal and a location identifier of the user terminal accessing a network, to determine a first location identifier of the first user terminal accessing a network, where the first location identifier includes an identifier of a first SF device and an identifier of a first physical port on the first SF device; and send the first location identifier to the USF device.

The USF device is configured to: determine the second UP device based on the first location identifier; and configure a second SF device by using a controller, to switch traffic from the first user terminal from a first sub-interface that is on the first SF device and that corresponds to the first UP device to a second sub-interface that is on the second SF device and that corresponds to the second UP device, where the second SF device is the same as or different from the first SF device.

In a possible implementation, the USF device is configured to return an identifier of the second UP device to the CP device. The CP device is configured to: receive the identifier of the second UP device that is returned by the USF device, determine a second location identifier based on the identifier of the second UP device, and configure a correspondence between the source information of the first user terminal and the second location identifier, where the second location identifier includes an identifier of the second SF device and an identifier of a second physical port on the second SF device.

In a possible implementation, the second physical port is the same as or different from the first physical port.

In a possible implementation, the source information of the first user terminal includes at least one of a MAC identifier and a VLAN identifier.

In a possible implementation, the identifier of the first physical port includes a slot identifier and/or a subcard identifier, and a port identifier.

In a possible implementation, the first packet includes an IP packet or an ARP packet.

In a possible implementation, the CP device is configured to deliver a subscriber entry to the second UP device, where the subscriber entry includes the source information of the first user terminal.

In a possible implementation, the CP device is configured to: send an authentication request to an authentication server, where the authentication request includes the first location identifier; receive an authentication response returned by the authentication server, where the authentication response includes a service quality requirement corresponding to the first location identifier; and send the service quality requirement to the USF.

The USF device is configured to determine the second UP device based on the first location identifier and the service quality requirement.

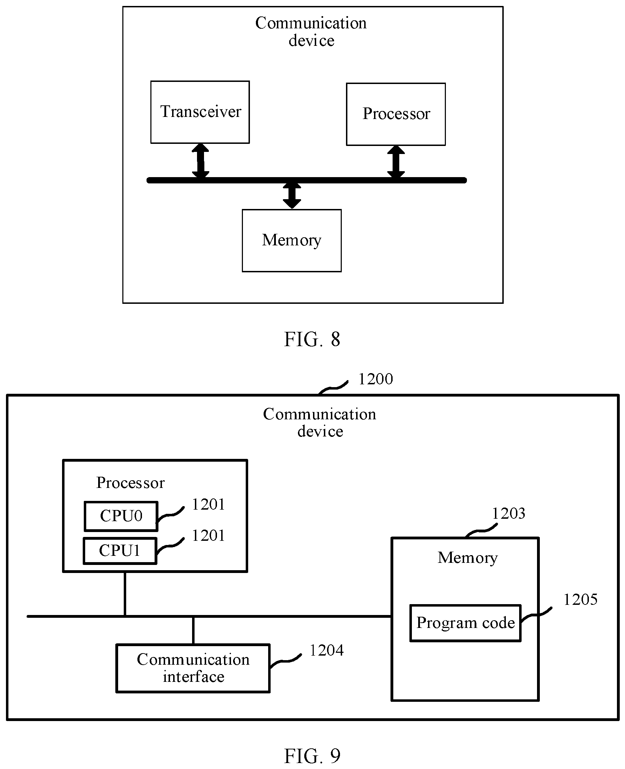

Specific hardware structures of communication devices in the foregoing embodiments, such as the SF device, the CP device, the UP device, the SDN controller, and the USF device, may be shown in FIG. 8, and include a transceiver, a processor, and a memory. For example, the transceiver is configured to receive a packet, the memory is configured to store instructions, and the processor is configured to invoke the instructions in the memory, to enable each communication device to perform related processing steps of each communication device in the foregoing method embodiments.

FIG. 9 is a schematic diagram of a structure of a communication device 1200 according to an example embodiment of this application. The communication device 1200 shown in FIG. 9 is configured to perform an operation related to the communication method shown in FIG. 3 and FIG. 5. The communication device 1200 is, for example, a switch or a router.

As shown in FIG. 9, the communication device 1200 includes at least one processor, a memory 1203, and a communication interface 1204. There may be one or more communication interfaces 1204.

The processor is, for example, a general-purpose central processing unit (Central Processing Unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement a solution of this application. For example, a processor 1201 includes an application-specific integrated circuit (application-specific integrated circuit, ASIC), a programmable logic device (programmable logic device, PLD) or another programmable logic device, a transistor logic device, a hardware component, or any combination thereof. For example, the PLD is a complex programmable logic device (complex programmable logic device, CPLD), a field-programmable logic gate array (field-programmable gate array, FPGA), a generic array logic (generic array logic, GAL), or any combination thereof. The processor may implement or perform various logical blocks, modules, and circuits described with reference to content disclosed in embodiments of this application. Alternatively, the processor may be a combination for implementing a computing function, for example, a combination including one or more microprocessors, or a combination of a DSP and a microprocessor.

Optionally, the communication device 1200 further includes a bus. The bus is configured to transmit information between components of the communication device 1200. The bus may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of indication, the bus is indicated by using only one bold line in FIG. 9. However, it does not indicate that there is only one bus or only one type of bus. Components of the communication device 1200 in FIG. 9 may be connected in another manner in addition to being connected by using the bus. A connection manner of the components is not limited in this embodiment of this application.

The memory 1203 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. This is not limited thereto. For example, the memory 1203 exists independently, and is connected to the processor by using the bus. Alternatively, the memory 1203 may be integrated with the processor.

The communication interface 1204 is used in any apparatus such as a transceiver, and is configured to communicate with another device or a communication network. The communication network may be an Ethernet, a radio access network (RAN), a wireless local area network (wireless local area network, WLAN), or the like. The communication interface 1204 may include a wired communication interface, and may further include a wireless communication interface. Specifically, the communication interface 1204 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 1204 may be used by the communication device 1200 to communicate with another device.

In specific implementation, in an embodiment, the processor may include one or more CPUs, for example, a CPU0 1201 and a CPU1 1201 shown in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

In specific implementation, in an embodiment, the communication device 1200 may include a plurality of processors, and each of the processors may be a single-core processor (single-CPU), or may be a multi-core processor (multi-CPU). The processor herein may be one or more devices, circuits, and/or processing cores configured to process data (for example, computer program instructions).

In specific implementation, in an embodiment, the communication device 1200 may further include an output device and an input device. The output device communicates with the processor 1201, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor, and may receive an input of a user in a plurality of manners. For example, the input device may be a mouse, a keyboard, a touchscreen device, or a sensor device.

In some embodiments, the memory 1203 is configured to store program code 1205 for performing the solution of this application, and the processor may execute the program code 1205 stored in the memory 1203. In other words, the communication device 1200 may implement, by using the processor and the program code 1205 in the memory 1203, the communication method provided in the method embodiment. The program code 1205 may include one or more software modules. Optionally, the processor may also store program code or instructions for executing the solution of this application.

In a specific embodiment, the communication device 1200 in this embodiment of this application may correspond to the SF device, the USF device, the CP device, the UP device, or the SDN controller in the foregoing method embodiments. The processor in the communication device 1200 reads the program code 1205 in the memory 1203 or the program code or the instruction stored in the processor, so that the communication device 1200 shown in FIG. 9 can perform all or some operations performed by the SF device, the USF device, the CP device, the UP device, or the SDN controller.

The communication device 1200 may further correspond to the apparatus shown in any one of FIG. 6 or FIG. 7, and each function module in the apparatus shown in any one of FIG. 6 or FIG. 7 is implemented by using software of the communication device 1200. In other words, the function modules included in the apparatus shown in any one of FIG. 6 or FIG. 7 are generated after the processor of the communication device 1200 reads the program code 1205 stored in the memory 1203.

Steps of the communication methods shown in FIG. 3 and FIG. 5 are completed by using an integrated logical circuit of hardware in the processor of the communication device 1200 or an instruction in a form of software. The steps of the methods disclosed with reference to embodiments of this application may be directly performed by a hardware processor, or may be performed by using a combination of hardware and a software module in the processor. The software module may be located in a mature storage medium in the art, such as a random access memory, a flash memory, a read-only memory, a programmable read-only memory, an electrically erasable programmable memory, a register, or the like. The storage medium is located in the memory. The processor reads information in the memory, and completes the steps of the foregoing methods in combination with the hardware of the processor. To avoid repetition, details are not described herein again.

An embodiment of this application further provides a communication apparatus. The apparatus includes a transceiver, a memory, and a processor. The transceiver, the memory, and the processor communicate with each other through an internal connection channel. The memory is configured to store instructions. The processor is configured to execute the instructions stored in the memory, to control the transceiver to receive a signal and control the transceiver to send a signal. When the processor executes the instruction stored in the memory, the processor is enabled to perform a method to be performed by a CP device.

It should be understood that the processor may be a CPU, or may be another general purpose processor, a digital signal processor (digital signal processing, DSP), an application-specific integrated circuit (application-specific integrated circuit, ASIC), a field-programmable gate array (field-programmable gate array, FPGA), or another programmable logic device, a discrete gate or transistor logic device, a discrete hardware component, or the like. The general purpose processor may be a microprocessor, any conventional processor, or the like. It should be noted that the processor may be a processor that supports an advanced reduced instruction set computing machine (advanced RISC machine, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. As described by way of example but not limitation, many forms of RAM are available. For example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data date SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The storage medium stores at least one instruction, and the instruction is loaded and executed by a processor, to enable a computer to implement any one of the foregoing communication methods.

An embodiment of this application further provides a computer program (product). When the computer program is executed by a computer, a processor or the computer may be enabled to perform corresponding steps and/or procedures in the foregoing method embodiments.

An embodiment of this application further provides a chip, including a processor, configured to invoke, from a memory, an instruction stored in the memory and run the instruction, so that a communication device in which the chip is installed performs any one of the foregoing communication methods.

An embodiment of this application further provides another chip, including an input sub-interface, an output sub-interface, a processor, and a memory. The input sub-interface, the output sub-interface, the processor, and the memory are connected through an internal connection channel. The processor is configured to execute code in the memory, and when the code is executed, the processor is configured to perform any one of the foregoing communication methods.

All or a part of the foregoing embodiments may be implemented by software, hardware, firmware, or any combination thereof. When the software is used to implement embodiments, all or a part of embodiments may be implemented in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, or any other programmable apparatus. The computer instructions may be stored in a computer-readable storage medium, or may be transmitted from a computer-readable storage medium to another computer-readable storage medium. For example, the computer instructions may be transmitted from a website, computer, server, or data center to another web site, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive)), or the like.

A person of ordinary skill in the art may be aware that, in combination with the method steps and modules described in embodiments disclosed in this specification, the method steps and modules may be implemented by software, hardware, firmware, or any combination thereof. To clearly describe interchangeability between the hardware and the software, the foregoing has generally described steps and compositions of each embodiment according to functions. Whether the functions are performed by the hardware or the software depends on particular applications and design constraints of the technical solutions. A person of ordinary skill in the art may use different methods to implement the described functions for each particular application, but it should not be considered that the implementation goes beyond a scope of this application.

A person of ordinary skill in the art may understand that all or some of the steps of embodiments may be implemented by the hardware or program instructing related hardware. The program may be stored in a computer-readable storage medium. The storage medium may be a read-only memory, a magnetic disk, or an optical disc.

When the software is used to implement embodiments, all or a part of embodiments may be implemented in a form of a computer program product. The computer program product includes one or more computer program instructions. For example, the method in this embodiment of this application may be described in a context of a machine-executable instruction. The machine-executable instruction is included, for example, in a program module executed in a device on a real or virtual processor of a target. Generally, a program module includes a routine, a program, a library, an object, a class, a component, a data structure, and the like, and performs a specific task or implements a specific abstract data structure. In various embodiments, functions of the program module may be combined or divided between described program modules. The machine-executable instruction for the program module may be executed locally or within a distributed device. In the distributed device, the program module may be located in both a local and a remote storage medium.

Computer program code used to implement the method in embodiments of this application may be written by using one or more programming languages. The computer program code may be provided for a processor of a general-purpose computer, a dedicated computer, or another programmable data processing apparatus, so that when the program code is executed by the computer or the another programmable data processing apparatus, a function/operation specified in a flowchart and/or a block diagram is implemented. The program code can be completely executed on a computer, partially executed on a computer, independently executed as a software package, partially executed on a computer and partially executed on a remote computer, or completely executed on a remote computer or server.

In a context of embodiments of this application, the computer program code or related data may be carried in any appropriate carrier, so that the device, the apparatus, or the processor can perform various processing and operations described above. Examples of the carrier include a signal, a computer-readable medium, and the like.

Examples of the signal may include an electrical, an optical, a radio, a sound, or another form of propagation signal, such as a carrier and an infrared signal.

A machine readable medium may be any tangible medium that includes or stores a program for or has a program relating to an instruction execution system, apparatus, or device. The machine readable medium may be a machine readable signal medium or a machine readable storage medium. The machine readable medium may include but is not limited to an electronic, a magnetic, an optical, an electromagnetic, an infrared, or a semiconductor system, apparatus, or device, or any suitable combination thereof. More detailed examples of the machine readable storage media include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any suitable combination thereof.

It can be clearly understood by a person skilled in the art that, for a purpose of convenient and brief description, as for a specific working process of the foregoing system, device and module, reference can be made to the corresponding process in the foregoing method embodiments, and the details are not described herein again.

In the several embodiments provided in this application, it should be understood that the disclosed system, device, and method may be implemented in other manners. For example, the device embodiment described above is merely an example. For example, division into the modules is merely logical function division and may be other division in an actual application. For example, a plurality of modules or components may be combined or integrated into another system, or some features may be ignored or not performed. In addition, displayed or discussed mutual couplings or direct couplings or communication connections may be implemented by using some sub-interfaces, indirect couplings or communication connections between the devices or modules, or may be implemented in electrical, mechanical, or another form.

The modules described as separate parts may or may not be physically separate, and parts displayed as modules may or may not be physical modules, that is, may be located in one position, or may be distributed on a plurality of network modules. Some or all of the modules may be selected based on actual requirements to achieve an objective of a solution of embodiments of this application.

In addition, function modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated module may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

In this application, the terms such as "first" and "second" are used to distinguish between same items or similar items that have basically same functions. It should be understood that there is no logical or time sequence dependency between "first", "second", and "n^{th}", and a quantity and an execution sequence are not limited. It should also be understood that although the following description uses the terms such as first and second to describe various elements, these elements should not be limited by the terms. These terms are merely used to distinguish one element from another. For example, a first image may be referred to as a second image without departing from scopes of various examples, and similarly, a second image may be referred to as a first image. Both the first image and the second image may be images, and in some cases may be separate and different images.

It should be further understood that sequence numbers of the processes do not mean execution sequences in various embodiments of this application. The execution sequences of the processes should be determined based on functions and internal logic of the processes, and should not be construed as any limitation on implementation processes of embodiments of this application.

In this application, the term "at least one" means one or more, and the term "a plurality of" in this application means two or more. For example, a plurality of second packets means two or more second packets. The terms "system" and "network" are often interchangeable in this specification.

It should be understood that the terms used in description of various examples herein are merely intended to describe specific examples and are not intended to limit. Terms "one" ("a" and "an") and "the" of singular forms used in the descriptions of the various examples and the appended claims are also intended to include plural forms, unless otherwise specified in the context clearly.

It should be further understood that the term "and/or" used in this specification refers to and covers any and all possible combinations of one or more associated listed items. The term "and/or" describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

It should further be understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should be further understood that the terms "if" and "if" may be explained as "when" ("when" or "upon"), "in response to determining", or "in response to detecting". Similarly, according to a context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B according to A does not mean that B is determined according to A only, and B may be further determined according to A and/or other information.

It should be further understood that "an embodiment", "an embodiment", and "a possible implementation" mentioned throughout the specification mean that particular features, structures, or characteristics related to the embodiment or the implementation are included in at least one embodiment of this application. Therefore, "in an embodiment", "in an embodiment", or "a possible implementation" mentioned throughout the specification does not necessarily refer to a same embodiment. In addition, these particular features, structures, or characteristics may be combined in one or more embodiments in any appropriate manner.

The foregoing descriptions are merely optional embodiments of this application, but are not intended to limit this application. Any modification, equivalent replacement, or improvement made within the principle of this application should fall within the protection scope of this application.

## Claims

1. A communication method, wherein the method is applied to a control plane CP device of a virtual broadband network gateway, the virtual broadband network gateway further comprises a first user plane UP device, and the method comprises:
receiving (301), by the CP device, a first packet sent by the first UP device, wherein the first packet carries source information of a first user terminal, and the first user terminal is a user terminal that obtains an internet protocol IP address statically;
searching (302), by the CP device based on the source information of the first user terminal, a correspondence between source information of a user terminal and a location identifier of the user terminal accessing a network, to determine a first location identifier of the first user terminal accessing a network, wherein the first location identifier comprises an identifier of a first steering function SF device and an identifier of a first physical port on the first SF device; and
sending (303), by the CP device, the first location identifier to a UP steering function USF device.

2. The method according to claim 1, wherein the method further comprises:
receiving, by the CP device, an identifier of a second UP device that is returned by the USF device; and
determining, by the CP device, a second location identifier based on the identifier of the second UP device, and storing a correspondence between the source information of the first user terminal and the second location identifier, wherein the second location identifier comprises an identifier of a second SF device and an identifier of a second physical port on the second SF device, and the second SF device is the same as or different from the first SF device.

3. The method according to claim 2, wherein the second physical port is the same as or different from the first physical port.

4. The method according to any one of claims 1 to 3, wherein the source information of the first user terminal comprises at least one of a media access control MAC identifier and a virtual local area network VLAN identifier.

5. The method according to any one of claims 1 to 4, wherein the identifier of the first physical port comprises a slot identifier and/or a subboard identifier, and a port identifier.

6. The method according to any one of claims 1 to 5, wherein the first packet comprises an IP packet or an address resolution protocol ARP packet.

7. The method according to any one of claims 1 to 6, wherein the method further comprises:
delivering, by the CP device, a subscriber entry to the second UP device, wherein the subscriber entry comprises the source information of the first user terminal.

8. The method according to any one of claims 1 to 7, wherein after the determining a first location identifier of the first user terminal accessing a network, the method further comprises:
sending, by the CP device, an authentication request to an authentication server, wherein the authentication request comprises the first location identifier;
receiving, by the CP device, an authentication response returned by the authentication server, wherein the authentication response comprises a service quality requirement corresponding to the first location identifier; and
sending, by the CP device, the service quality requirement to the USF.

9. A network device, wherein the network device comprises a processor, the processor is coupled to a memory, the memory stores at least one program instruction or code, and the at least one program instruction or code is loaded and executed by the processor, to enable the network device to implement the communication method according to any one of claims 1 to 8.

10. A computer-readable storage medium, wherein the computer storage medium stores at least one instruction, and the at least one instruction is loaded and executed by a processor, to enable a computer to implement the communication method according to any one of claims 1 to 8.

11. A communication system, comprising a control plane CP device of a virtual broadband network gateway, the virtual broadband network gateway further comprises a first user plane UP device and a second UP device, the communication system further comprises a UP steering function USF device, wherein the CP device is configured to implement the communication method according to any one of claims 1 to 8.

## Patentansprüche

1. Kommunikationsverfahren, wobei das Verfahren auf eine Control-Plane-(CP-)Vorrichtung eines virtuellen Breitbandnetzwerk-Gateways angewendet wird, wobei das virtuelle Breitbandnetzwerk-Gateway ferner eine erste User-Plane-(UP-)Vorrichtung umfasst und das Verfahren Folgendes umfasst:
Empfangen (301) eines ersten, von der ersten UP-Vorrichtung gesendeten Pakets durch die CP-Vorrichtung, wobei das erste Paket Quellinformationen eines ersten Benutzerterminals enthält und das erste Benutzerterminal ein Benutzerterminal ist, das statisch eine Internetprotokoll-(IP-)Adresse erlangt;
Suchen (302) einer Übereinstimmung zwischen Quellinformationen eines Benutzerterminals und einer Standortkennung des auf ein Netzwerk zugreifenden Benutzerterminals durch die CP-Vorrichtung basierend auf den Quellinformationen des ersten Benutzerterminals, um eine erste Standortkennung des auf ein Netzwerk zugreifenden ersten Benutzerterminals zu bestimmen, wobei die erste Standortkennung eine Kennung einer ersten Steering-Function-(SF-)Vorrichtung und eine Kennung eines ersten physischen Ports auf der ersten SF-Vorrichtung umfasst; und
Senden (303) der ersten Standortkennung durch die CP-Vorrichtung an eine UP-Steering-Function-(USF-)Vorrichtung.

2. Verfahren nach Anspruch 1, wobei das Verfahren ferner Folgendes umfasst:
Empfangen einer Kennung einer zweiten UP-Vorrichtung, die von der USF-Vorrichtung zurückgesendet wird, durch die CP-Vorrichtung; und
Bestimmen einer zweiten Standortkennung durch die CP-Vorrichtung basierend auf der Kennung der zweiten UP-Vorrichtung und Speichern einer Übereinstimmung zwischen den Quellinformationen des ersten Benutzerterminals und der zweiten Standortkennung, wobei die zweite Standortkennung eine Kennung einer zweiten SF-Vorrichtung und eine Kennung eines zweiten physischen Ports auf der zweiten SF-Vorrichtung umfasst und die zweite SF-Vorrichtung dieselbe wie die erste SF-Vorrichtung ist oder sich von dieser unterscheidet.

3. Verfahren nach Anspruch 2, wobei der zweite physische Port derselbe wie der erste physische Port ist oder sich von diesem unterscheidet.

4. Verfahren nach einem der Ansprüche 1 bis 3, wobei die Quellinformationen des ersten Benutzerterminals mindestens eine Media-Access-Control-(MAC-)Kennung für und eine Virtual-Local-Area-Network-(VLAN-)Kennung umfassen.

5. Verfahren nach einem der Ansprüche 1 bis 4, wobei die Kennung des ersten physischen Ports eine Steckplatzkennung und/oder eine Subboard-Kennung und eine Portkennung umfasst.

6. Verfahren nach einem der Ansprüche 1 bis 5, wobei das erste Paket ein IP-Paket oder ein Address-Resolution-Protocol-(ARP-) Paket umfasst.

7. Verfahren nach einem der Ansprüche 1 bis 6, wobei das Verfahren ferner Folgendes umfasst:
Übermitteln eines Teilnehmereintrags durch die CP-Vorrichtung an die zweite UP-Vorrichtung, wobei der Teilnehmereintrag die Quellinformationen des ersten Benutzerterminals umfasst.

8. Verfahren nach einem der Ansprüche 1 bis 7, wobei das Verfahren nach dem Bestimmen einer ersten Standortkennung des ersten auf ein Netzwerk zugreifenden Benutzerterminals ferner Folgendes umfasst:
Senden einer Authentifizierungsanfrage an einen Authentifizierungsserver durch die CP-Vorrichtung, wobei die Authentifizierungsanfrage die erste Standortkennung umfasst;
Empfangen einer von dem Authentifizierungsserver zurückgesendeten Authentifizierungsantwort durch die CP-Vorrichtung, wobei die Authentifizierungsantwort eine Servicequalitätsanforderung enthält, die der ersten Standortkennung entspricht; und
Senden der Servicequalitätsanforderung an die USF durch die CP-Vorrichtung.

9. Netzwerkvorrichtung, wobei die Netzwerkvorrichtung einen Prozessor umfasst, der Prozessor mit einem Speicher gekoppelt ist, der Speicher mindestens eine Programmanweisung oder einen Programmcode speichert und die mindestens eine Programmanweisung oder der Programmcode vom Prozessor geladen und ausgeführt wird, um der Netzwerkvorrichtung zu ermöglichen, das Kommunikationsverfahren nach einem der Ansprüche 1 bis 8 zu implementieren.

10. Computerlesbares Speichermedium, wobei das computerlesbare Speichermedium mindestens eine Anweisung speichert und die mindestens eine Anweisung durch einen Prozessor geladen und ausgeführt wird, um einem Computer zu ermöglichen, das Verfahren nach einem der Ansprüche 1 bis 8 zu implementieren.

11. Kommunikationssystem, umfassend eine Control-Plane-(CP-)Vorrichtung eines virtuellen Breitbandnetzwerk-Gateways, wobei das virtuelle Breitbandnetzwerk-Gateway ferner eine erste User-Plane-(UP-)Vorrichtung und eine zweite UP-Vorrichtung umfasst, wobei das Kommunikationssystem ferner eine UP-Steering-Function-(USF-)Vorrichtung umfasst, wobei die CP-Vorrichtung konfiguriert ist, um das Kommunikationsverfahren nach einem der Ansprüche 1 bis 8 zu implementieren.

## Revendications

1. Procédé de communication, dans lequel le procédé est appliqué à un dispositif de plan de commande, CP, d'une passerelle de réseau haut débit virtuelle, la passerelle de réseau haut débit virtuelle comprend également un premier dispositif de plan utilisateur, UP, et le procédé comprend :
la réception (301), par le dispositif CP, d'un premier paquet envoyé par le premier dispositif UP, dans lequel le premier paquet transporte des informations source d'un premier terminal utilisateur, et le premier terminal utilisateur est un terminal utilisateur qui obtient une adresse de protocole Internet, IP, de manière statique ;
la recherche (302), par le dispositif CP sur la base des informations source du premier terminal utilisateur, d'une correspondance entre des informations source d'un terminal utilisateur et un identifiant de localisation du terminal utilisateur accédant à un réseau, pour déterminer un premier identifiant de localisation du premier terminal utilisateur accédant à un réseau, dans lequel le premier identifiant de localisation comprend un identifiant d'un premier dispositif de fonction de pilotage, SF, et un identifiant d'un premier port physique sur le premier dispositif SF ; et
l'envoi (303), par le dispositif CP, du premier identifiant de localisation à un dispositif de fonction de pilotage UP, USF.

2. Procédé selon la revendication 1, dans lequel le procédé comprend également :
la réception, par le dispositif CP, d'un identifiant d'un second dispositif UP qui est renvoyé par le dispositif USF ; et
la détermination, par le dispositif CP, d'un second identifiant de localisation sur la base de l'identifiant du second dispositif UP, et l'enregistrement d'une correspondance entre les informations source du premier terminal utilisateur et le second identifiant de localisation, dans lequel le second identifiant de localisation comprend un identifiant d'un second dispositif SF et un identifiant d'un second port physique sur le second dispositif SF, et le second dispositif SF est identique ou différent du premier dispositif SF.

3. Procédé selon la revendication 2, dans lequel le second port physique est identique ou différent du premier port physique.

4. Procédé selon l'une quelconque des revendications 1 à 3, dans lequel les informations source du premier terminal utilisateur comprennent au moins l'un d'un identifiant de commande d'accès au support, MAC, et d'un identifiant de réseau local virtuel, VLAN.

5. Procédé selon l'une quelconque des revendications 1 à 4, dans lequel l'identifiant du premier port physique comprend un identifiant de créneau et/ou un identifiant de sous-carte, et un identifiant de port.

6. Procédé selon l'une quelconque des revendications 1 à 5, dans lequel le premier paquet comprend un paquet IP ou un paquet de protocole de résolution d'adresse, ARP.

7. Procédé selon l'une quelconque des revendications 1 à 6, dans lequel le procédé comprend également :
la fourniture, par le dispositif CP, d'une entrée d'abonné au second dispositif UP, dans lequel l'entrée d'abonné comprend les informations source du premier terminal utilisateur.

8. Procédé selon l'une quelconque des revendications 1 à 7, dans lequel, après la détermination d'un premier identifiant de localisation du premier terminal utilisateur accédant à un réseau, le procédé comprend également :
l'envoi, par le dispositif CP, d'une demande d'authentification à un serveur d'authentification, dans lequel la demande d'authentification comprend le premier identifiant de localisation ;
la réception, par le dispositif CP, d'une réponse d'authentification renvoyée par le serveur d'authentification, dans lequel la réponse d'authentification comprend une exigence de qualité de service correspondant au premier identifiant de localisation ; et
l'envoi, par le dispositif CP, de l'exigence de qualité de service à l'USF.

9. Dispositif réseau, dans lequel le dispositif réseau comprend un processeur, le processeur est couplé à une mémoire, la mémoire enregistre au moins un code ou instruction de programme, et l'au moins un code ou instruction de programme est chargé et exécuté par le processeur, pour permettre au dispositif réseau de mettre en œuvre le procédé de communication selon l'une quelconque des revendications 1 à 8.

10. Support d'enregistrement lisible par ordinateur, dans lequel le support d'enregistrement informatique enregistre au moins une instruction, et l'au moins une instruction est chargée et exécutée par un processeur, pour permettre à un ordinateur de mettre en œuvre le procédé de communication selon l'une quelconque des revendications 1 à 8.

11. Système de communication, comprenant un dispositif de plan de commande, CP, d'une passerelle de réseau à haut débit virtuelle, la passerelle de réseau à haut débit virtuelle comprend également un premier dispositif de plan utilisateur, UP, et un second dispositif UP, le système de communication comprend également un dispositif de fonction de pilotage UP, USF, dans lequel le dispositif CP est configuré pour mettre en œuvre le procédé de communication selon l'une quelconque des revendications 1 à 8.
